# EUROPEAN PATENT APPLICATION

(11) **EP 4 597 692 A1**
(43) Date of publication of application: **06.08.2025**
(21) Application number: 23907578.1
(22) Date of filing: 14.12.2023
(51) Int. Cl.: H01M 10/6551, H01M 10/613, H01M 50/211

(54) **BATTERY MODULE AND METHOD FOR MANUFACTURING SAME**

(30) Priority: 19.12.2022 KR 20220178455
(71) Applicant: LG Energy Solution, Ltd., Seoul 07335 (KR)
(72) Inventor: RYU, Kye Yeon, Daejeon 34122 (KR)
(74) Representative: Plasseraud IP
(86) International application number: PCT/KR2023/020602
(87) International publication number: WO 2024/136292

(57) **Abstract**

A battery module according to an exemplary embodiment of the present invention includes a battery cell stack in which a plurality of battery cells are stacked side by side and adjacent to each other; a top frame covering an upper surface of the battery cell stack; a bus bar frame coupled to the top frame and covering a side of the battery cell stack; and a module frame having a quadrangular tube shape and configured to accommodate a battery cell assembly formed by combining the battery cell stack, the top frame, and the bus bar frame, wherein the top frame includes a first protrusion protruding toward an upper surface of the module frame at one end portion of the top frame, and wherein the module frame includes a second protrusion protruding toward the top frame at a position corresponding to the other end portion located on an opposite side to the one end portion of the top frame on an inner side of the upper surface of the module frame.

## Description

### [Technical Field]

### CROSS-REFERENCE TO RELATED APPLICATION

This application claims priority to and the benefit of Korean Patent Application No. 10-2022-0178455 filed in the Korean Intellectual Property Office on December 19, 2022, the entire contents of which are incorporated herein by reference.

The present invention relates to a battery module and a method of manufacturing the same, and more specifically, to a battery module and a method of manufacturing the same, which can stabilize positions and dimensions of components in the battery module and prevent excessive resin injection into the battery module.

### [Background Art]

Along with the technology development and increased demand for mobile devices, demand for secondary batteries as energy sources is increasing sharply. Accordingly, researches are being conducted on secondary batteries that can meet various needs.

A secondary battery is attracting considerable attention as an energy source not only for power-driven devices such as an electric bike, an electric vehicle, and a hybrid electric vehicle as well as for mobile devices such as a mobile phone, a digital camera, and a laptop computer.

A small-sized device such as a mobile phone, a camera, and the like uses a small-sized battery pack in which a single battery cell is packed. However, a middle or large-sized device such as a laptop computer, an electric vehicle, and the like uses a middle or large-sized battery pack in which a battery pack consisting of two or more battery cells connected in parallel and/or in series is packed. Therefore, the number of battery cells included in the battery pack may be set in various ways according to a required output voltage or charging and discharging capacity.

Note that when configuring a battery pack by connecting a plurality of battery cells in series/parallel, a battery module composed of at least one battery cell is first configured, and other constitutional elements are added using the at least one battery module to configure a battery pack, which is a general method.

In the case of such a battery module, as the required battery capacity increases, importance of the technology capable of efficiently cooling heat generated from the battery cell is gradually increasing. To this end, a structure capable of improving thermal conductivity by applying a heat dissipation resin into a case has been introduced in the battery module.

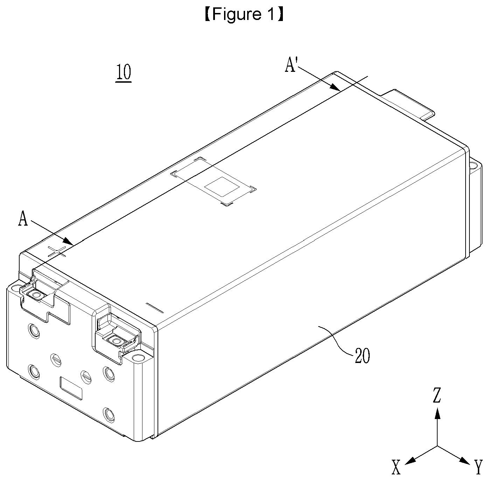

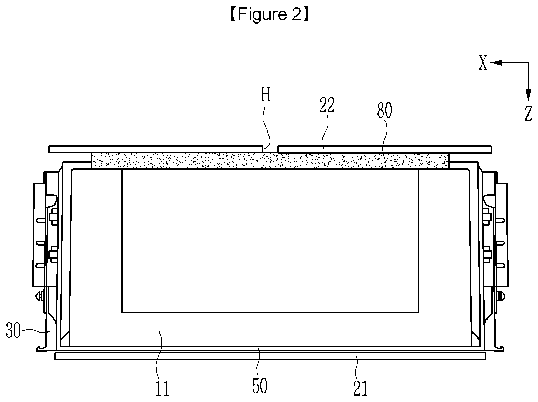

FIG. 1 is a view showing a battery module of the related art. FIG. 2 is a cross-sectional view taken along a line A-A' of FIG. 1 rotated by 180 degrees, showing a configuration in which an end plate is omitted.

In a battery module 10 of the related art, a battery cell stack 11 and a coupled frame of a top frame 50 and a bus bar frame 30 respectively coupled to an upper surface and a side of the battery cell stack 11 are accommodated inside a module frame 20, a thermally conductive resin for heat dissipation is injected with a lower surface facing upward. That is, as shown in FIG. 2, in a state in which an upper surface 21 of the module frame 20 is directed downward and a lower surface 22 is directed upward, the thermally conductive resin is injected through at least one injection hole (H) formed in the lower surface 22 and cured to form a thermally conductive resin layer 80.

However, during this process, in order to inject the thermally conductive resin into the module frame 20, a predetermined dimension of gap is required to secure an injection space, which may cause a position of the battery cell stack 11 to be unstable due to internal flow during a time after the battery cell stack 11 is inserted into the module frame 20 until the thermally conductive resin layer is formed, and may also cause positions of components combined with the battery cell stack 11 to be unstable. In addition, deviations in the internal space may cause an injection amount of thermally conductive resin to be variable, resulting in over-injection beyond necessity, which increases costs and increases the weight of the battery module.

### [Disclosure]

### [Technical Problem]

The present invention has been made to solve the problems, and an object thereof is to provide a battery module and a method of manufacturing the same, which can improve positional stability of a battery cell stack inside a module frame during manufacture of a battery module, and reduce a cost of a manufacturing process and prevent an unnecessary weight increase by injecting an appropriate amount of thermally conductive resin into the battery module.

However, the problems to be solved by exemplary embodiments of the present invention are not limited to the above-described problems, and can be variously expanded within the scope of the technical spirit included in the present invention.

### [Technical Solution]

A battery module according to an exemplary embodiment of the present invention includes a battery cell stack in which a plurality of battery cells are stacked side by side and adjacent to each other; a top frame covering an upper surface of the battery cell stack; a bus bar frame coupled to the top frame and covering a side of the battery cell stack; and a module frame having a quadrangular tube shape and configured to accommodate a battery cell assembly formed by combining the battery cell stack, the top frame, and the bus bar frame, wherein the top frame includes a first protrusion protruding toward an upper surface of the module frame at one end portion of the top frame, and wherein the module frame includes a second protrusion protruding toward the top frame at a position corresponding to the other end portion located on an opposite side to the one end portion of the top frame on an inner side of the upper surface of the module frame.

The first protrusion and the second protrusion may have the same protruding height.

Each of the first protrusion and the second protrusion may have an inclined shape so that heights of the first protrusion and the second protrusion decrease in a direction toward an inside of the module frame.

The battery module may further include a thermally conductive resin layer arranged between a lower surface of the module frame and the battery cell assembly.

The bus bar frame may include an extension protruding and extending along a lower surface of the battery cell stack, and the thermally conductive resin layer may be positioned on an inner side of the extension.

The one end portion and the other end portion may be end portions on both sides in a longitudinal direction of the top frame, and the first protrusion and the second protrusion may be arranged by two or more, respectively, along a width direction perpendicular to the longitudinal direction.

A method of manufacturing a battery module according to another exemplary embodiment of the present invention includes forming a battery cell assembly by combining a battery cell stack in which a plurality of battery cells are stacked side by side and adjacent to each other, a top frame covering an upper surface of the battery cell stack, and a bus bar frame coupled to the top frame and covering a side of the battery cell stack; and inserting the battery cell assembly into a module frame having a quadrangular tube shape, wherein the top frame includes a first protrusion protruding toward an upper surface of the module frame at one end portion of the top frame, wherein the module frame includes a second protrusion protruding toward an inner side of the module frame at a position corresponding to the other end portion located on an opposite side to the one end portion of the top frame on an inner side of the upper surface of the module frame, and wherein the inserting the battery cell assembly is performed in a state in which the top frame and the upper surface of the module frame are directed downward with respect to a direction of gravity, and includes inserting the other end portion of the top frame toward the second protrusion.

The first protrusion and the second protrusion may have the same protruding height.

The method may further include injecting and curing a thermally conductive resin between the battery cell assembly and a lower surface of the module frame after inserting the battery cell assembly, wherein in the injecting and curing the thermally conductive resin, the battery cell assembly may be supported by the first protrusion and the second protrusion.

Each of the first protrusion and the second protrusion may have an inclined shape so that heights of the first protrusion and the second protrusion decrease in a direction toward an inside of the module frame, and wherein in the inserting the battery cell assembly, the other end portion of the top frame may be inserted along the inclined shape of the second protrusion.

A battery pack according to still another exemplary embodiment of the present invention may include at least one battery module described above.

### [Advantageous Effects]

According to the exemplary embodiments, during the manufacturing process of the battery module, it is possible to provide a battery module and a method of manufacturing the same, which can improve positional stability of a battery cell stack inside a module frame during manufacture of a battery module, and reduce a cost of a manufacturing process and prevent an unnecessary weight increase by injecting an appropriate amount of thermally conductive resin into the battery module.

The effects of the present invention are not limited to the above-described effects, and other effects not described will be apparently understood by one skilled in the art from the claims.

### [Description of the Drawings]

FIG. 1 is a view showing a battery module of the related art.
FIG. 2 is a cross-sectional view taken along a line A-A' of FIG. 1 rotated by 180 degrees, showing a configuration in which an end plate is omitted.
FIG. 3 is a view showing a battery module according to an exemplary embodiment of the present invention.
FIG. 4 is an exploded view of the battery module of FIG. 3.
FIG. 5 is a cross-sectional view taken along a line B-B' of FIG. 3 rotated by 180 degrees, showing a configuration in which an end plate is omitted.
FIG. 6 is a diagram schematically showing a process of inserting a battery cell assembly into a module frame in a method of manufacturing a battery module according to another exemplary embodiment of the present invention.
FIG. 7 is a diagram schematically showing a process of injecting a thermally conductive resin into a battery module to complete the battery module, following FIG. 6.

### [Mode for Invention]

In the following detailed description, only certain exemplary embodiments of the present invention have been shown and described, simply by way of illustration. The present invention can be variously implemented and is not limited to the following exemplary embodiments.

The drawings and description are to be regarded as illustrative in nature and not restrictive. Like reference numerals designate like elements throughout the specification.

In addition, the size and thickness of each configuration shown in the drawings are arbitrarily shown for understanding and ease of description, but the present invention is not limited thereto. In the drawings, the thickness of layers, films, panels, regions, etc., are exaggerated for clarity. In the drawings, for understanding and ease of description, the thickness of some layers and areas is exaggerated.

Further, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, when an element is referred to as being "on" a reference portion, the element is positioned above or below the reference portion, and it does not necessarily mean that the element is positioned "above" or "on" in a direction opposite to gravity.

In addition, unless explicitly described to the contrary, the word "comprise", and variations such as "comprises" or "comprising", will be understood to imply the inclusion of stated elements but not the exclusion of any other elements.

Further, in the entire specification, when it is referred to as "on a plane", it means when a target part is viewed from above, and when it is referred to as "on a cross-section", it means when the cross-section obtained by cutting a target part vertically is viewed from the side.

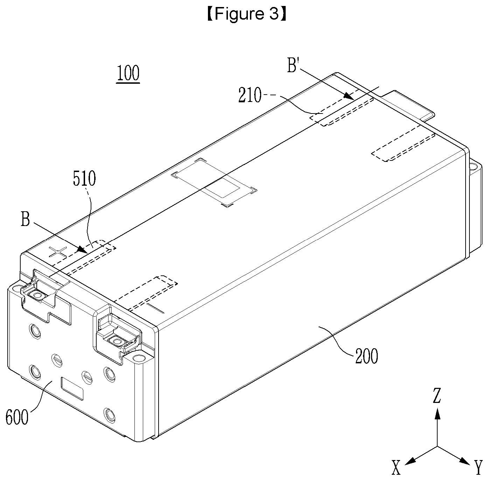

Hereinafter, a battery module according to an exemplary embodiment of the present disclosure will be described with reference to FIGS. 3 to 5.

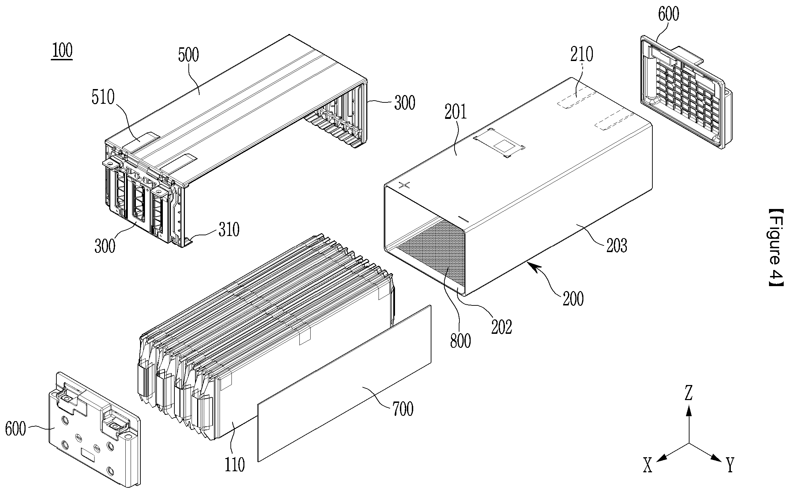

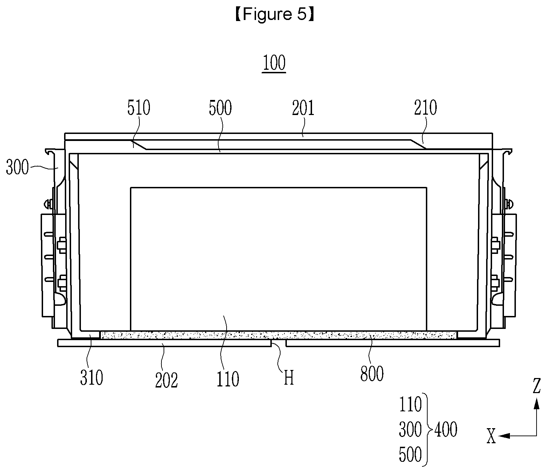

FIG. 3 is a view showing a battery module according to an exemplary embodiment of the present invention, FIG. 4 is an exploded view of the battery module of FIG. 3, and FIG. 5 is a cross-sectional view taken along a line B-B' of FIG. 3 rotated by 180 degrees, showing a configuration in which an end plate is omitted.

Referring to FIGS. 3 to 5, a battery module 100 according to an exemplary embodiment of the present invention includes a battery cell stack 110 in which battery cells are stacked, a top frame 500 covering an upper surface of the battery cell stack 110, a bus bar frame 300 coupled to the top frame 500 and covering a side of the battery cell stack 110, and a module frame 200 accommodating a battery cell assembly 400 formed by combining the battery cell stack 110, the top frame 500, and the bus bar frame 300.

The battery cell stack 110 is an assembly of secondary batteries including a plurality of battery cells. The battery cell stack 110 may include a plurality of battery cells, and each battery cell includes an electrode lead (not shown). The battery cell may be a pouch-type battery cell having a plate shape, but is not limited thereto. The electrode lead is either a positive electrode lead or a negative electrode lead, and an end portion of the electrode lead of each battery cell may be bent in one direction, resulting in contact with an end portion of the electrode lead of another adjacent battery cell. The two electrode leads in contact with each other may be fixed to each other by welding or the like, which enables electrical connection between the battery cells within the battery cell stack 110.

The plurality of battery cells are vertically stacked so that the electrode leads are aligned in one direction (+X and -X directions in the drawing), thereby forming the battery cell stack 110. The electrode leads aligned in one direction may be electrically connected to a bus bar fixed to the bus bar frame 300 arranged to cover the battery cell stack 110. That is, the bus bar frame 300 includes lead slots which is made of an insulator and through which the electrode leads pulled out from the battery cell stack 110 can pass, and the bus bar can electrically connect the electrode leads 112 of the battery cell stack 110.

Various other electric components may be attached to the bus bar frame 300. For example, an internal circuit board (ICB) and a battery management system (BMS) may be provided, and electric components such as the ICB and the BMS board may be electrically connected to the plurality of battery cells.

The top frame 500 is positioned on top of the battery cell stack 110, and the bus bar frames 300 are rotatably coupled to both sides of the top frame. In this case, the bus bar is mounted on the bus bar frame 300, and a flexible printed circuit board (FPCB) may be arranged at an upper end along a longitudinal direction of the top frame 500. The flexible printed circuit board is electrically connected to the bus bar, allowing sensing of an overvoltage, an overcurrent, and the like of the battery cell. In addition, a connector is connected to one end of the board, so that signals related to voltage sensing and temperature sensing can be transmitted and received with respect to a controller provided outside the battery module 100.

The bus bar frame 300 includes an extension 310 extending and protruding from a lower end portion along a lower surface of the battery cell stack 110. As a result, the bus bar frame 300 in FIG. 4 may have an L-shaped side shape. The extension 310 can protect corner portions of the battery cell stack 110, which have weak rigidity, thereby preventing the corner portions of the battery cell stack 110 from being damaged.

The top frame 500 is arranged on top of the battery cell stack 110, and the bus bar frames 300 rotatably coupled to the top frame 500 are rotated to couple with the sides of the battery cell stack 110 with electrode leads, thereby forming the battery cell assembly 400. The battery cell assembly 400 is accommodated in the module frame 200 having a quadrangular tube shape having at least one opening open in the longitudinal direction of the battery cell stack 110 and including four plates surrounding at least four sides of the battery cell stack 110. That is, the module frame 200 may include a lower surface 202, an upper surface 201 facing the lower surface 202, and two sides 203 connecting the upper surface 201 and the lower surface 202. Note that in a state in which the battery cell assembly 400 is accommodated in the module frame 200, the bus bar frame 300 is exposed through the opening of the module frame 200, and the opening may be covered by an end plate 600.

A thermally conductive resin layer 800 is positioned between a lower surface of the battery cell stack 110 and a lower surface of the module frame 200. The thermally conductive resin layer 800 is made of a thermally conductive material so as to dissipate heat generated from the battery cell stack 110 to the outside, and may be made of a thermal resin, for example. Examples of such a thermal resin may include silicone, urethane, and epoxy. In addition, the thermally conductive resin layer 800 may serve to transfer the heat generated in this way to the bottom of the battery module 100 and to fix the battery cell stack 110 within the battery module 100. The thermally conductive resin layer 800 may be formed by curing a thermally conductive resin injected in a liquid state through the hole H formed in the lower surface of the module frame 200. The thermally conductive resin layer 800 obtained in this way may be arranged between the battery cell assembly 400 and the lower surface 202 of the module frame 200 on an inner side of the extension 310 of the bus bar frame 300, as shown in FIG. 5.

An expansion control pad 700 may be provided between a side of the battery cell stack 110 and the module frame 200. The expansion control pad 700 can control cell swelling by being compressed and acting as a buffer when the battery cell expands, thereby preventing damage to the battery cell and module frame 200 due to the expansion of the battery cell. To this end, the expansion control pad 700 may include a material including a soft elastic material such as polyurethane (PU) or ethylene propylene diene monomer (EDPM). Since this material has excellent vibration absorption and compressive repulsion, the battery module 100 with excellent dimensional stability can be provided even if cell swelling occurs in the plurality of battery cells.

Note that the top frame 500 includes a first protrusion 510 protruding from one end portion of the top frame 500 toward the module frame 200. In this case, the one end portion refers to one end portion on one side in the longitudinal direction of the top frame 500, that is, a direction parallel to the X axis in the drawing, for example, an end portion on the +X side in the drawings. The first protrusion 510 is formed to protrude toward the upper surface 201 of the module frame 200. That is, in the drawing, the first protrusion protrudes toward the top in the Z-axis direction. Additionally, the first protrusions 510 may be provided by two or more. In this case, the first protrusions may be arranged to be spaced apart from each other in a width direction perpendicular to the longitudinal direction of the top frame 500, that is, in a direction parallel to the Y axis in the drawing. The first protrusion 510 may have, at an end portion directed toward an inner side of the module frame 200, an inclined shape of which height decreases toward the inner side. As a result, damage to components can be prevented when inserting the battery cell assembly 400, as will be described below.

The module frame 200 includes a second protrusion 210 on an inner side of the upper surface 201. The second protrusion 210 is formed at a position corresponding to the other end portion located on an opposite side to the one end portion where the first protrusion 510 is formed. That is, the second protrusion 210 is arranged at a position corresponding to an end portion on the -X side in the drawing, and protrudes from an inner side of the upper surface 201 toward the inside of the module frame 200. The second protrusion 210 is formed to have the same height as the first protrusion 510. Additionally, the second protrusion 210 may have, at an end portion directed toward the inner side of the module frame 200, an inclined shape of which height decreases toward the inner side.

In this case, the first protrusion 510 and the second protrusion 210 may be set within a range that can secure a space for forming the thermally conductive resin layer 800 inside the module frame 200 when manufacturing the battery module 100 while securing a space for accommodating components provided for the battery cell assembly 400. That is, the battery cell assembly 400 occupies most of the space inside the battery module 100, but needs to be arranged stably at a designated position, especially a designated position in the Z-axis direction, to allow for provision of other components and the thermally conductive resin layer 800. In the related art, there is a problem that the position of the battery cell assembly varies when the top and bottom are reversed during a manufacturing process. However, according to the present exemplary embodiment, since the position of the battery cell assembly 400 can be regulated by the first and second protrusions, positional instability of the battery cell assembly 400 can be prevented. In addition, as will be described below, an injection amount of thermally conductive resin injected to form the thermally conductive resin layer 800 is made uniform and the thermally conductive resin is allowed to be injected only by an appropriate amount, thereby preventing increases in weight and cost due to over-injection.

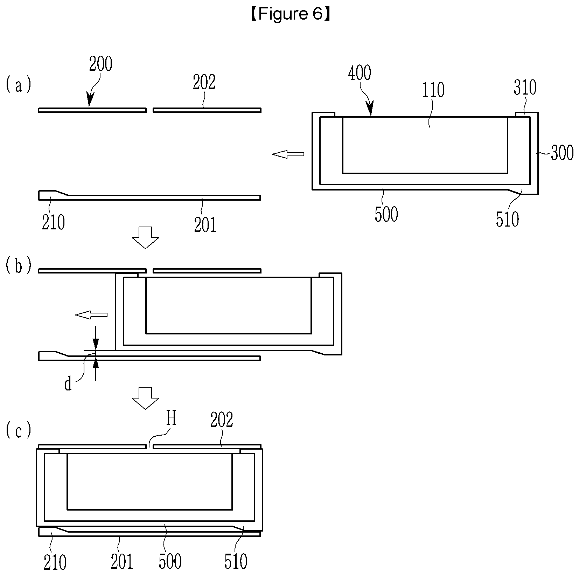

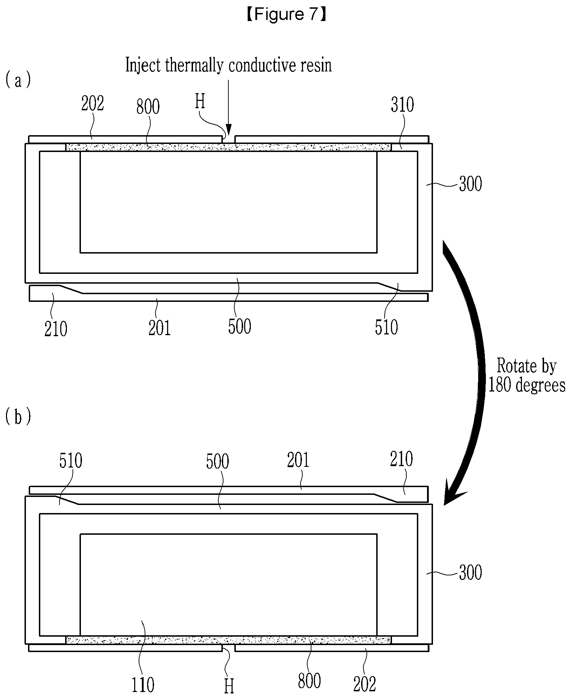

Next, a method of manufacturing a battery module according to another exemplary embodiment of the present invention will be described with reference to FIGS. 6 and 7.

FIG. 6 is a diagram schematically showing a process of inserting a battery cell assembly into a module frame in a method of manufacturing a battery module according to another exemplary embodiment of the present invention, and FIG. 7 is a diagram schematically showing a process of injecting a thermally conductive resin into a battery module to complete the battery module, following FIG. 6.

As shown in (a) of FIG. 6, the battery cell stack 110, the top frame 500 covering the upper surface of the battery cell stack 110, and the bus bar frame 300 coupled to the top frame 500 and covering the side of the battery cell stack 110 are combined to form the battery cell assembly 400. The battery cell assembly 400 is inserted into the module frame 200 with the upper surface 201 directed downward in a state in which the top frame 500 is directed downward.

The battery cell assembly 400 is inserted into the module frame 200 from the other end portion of the top frame 500, that is, the end portion where the first protrusion 510 is not formed, and at this time, may be inserted in a direction toward the end portion where the second protrusion 210 of the module frame 200 is formed. During the insertion process, a gap d corresponding to the height of the first and second protrusions 510 and 210 may be maintained between the upper surface 201 and the battery cell assembly 400. Additionally, the battery cell assembly 400 may be inserted along the inclined shape of the second protrusion 210 and seated on the second protrusion 210. During this process, the battery cell assembly 400 is inserted along an inclined shape, which can prevent damage due to interference between components during the insertion process. Additionally, since the first protrusion 510 formed at one end portion of the battery cell assembly 400 also has an inclined shape of which height decreases toward the inner side, an end portion of the module frame 200 can be coupled along the corresponding inclined shape during insertion, which can prevent damage to the module frame 200 and top frame 500 from during the insertion process.

By inserting the battery cell assembly 400 in this way, the battery cell assembly 400 is seated inside the module frame 200 while maintaining the gap corresponding to the first and second protrusions 510 and 210, as shown in (c) of FIG. 6.

Next, as shown in FIG. 7, a process of injecting a thermally conductive resin into the battery module is performed.

Injection of the thermally conductive resin is performed through the injection hole (H) formed in the lower surface 202 of the module frame 200 in an inverted state with the lower surface 202 directed upward. At this time, although the battery module is in the inverted state, the battery cell assembly 400 is supported by the first and second protrusions 510 and 210, so it is possible to maintain a state in which a desired dimension of space is secured between the battery cell assembly 400 and the upper surface 201. In addition, the space where the thermally conductive resin should be injected can be maintained at an appropriate interval without a variation. That is, when performing the injection process in the state in which the module is inverted, in the related art, the internal battery cell assembly 400 is forced to be arranged without a gap with the upper surface by gravity, and in this case, a larger injection space than necessary is created, resulting in an inevitable increase in injection amount of thermally conductive resin. Additionally, since the position of the battery cell assembly 400 is not fixed before the thermally conductive resin is cured, variations in the vertical direction may occur. However, according to the present exemplary embodiment, it is possible to prevent variations in the position of the battery cell assembly 400 that may occur during the injection process. In addition, the position of the battery cell assembly 400 in the vertical direction is fixed, so the space dimensions with the upper and lower surfaces of the module frame 200 can be maintained as intended. Therefore, the quality of the component dimensions of the battery module can be stabilized and the increases in weight and cost due to excessive injection of thermally conductive resin can be prevented.

After injecting and curing the thermally conductive resin, the battery module 100 is inverted again, as shown in (b) of FIG. 7, so that the upper components are directed upward.

As described above, it is possible to provide the method of manufacturing the battery module 100 in which, when inserting the battery cell assembly 400 into the module frame 200, the first protrusion 510 formed on the top frame 500 and the second protrusion 210 having the same height as the first protrusion 510 and formed on the inner side of the upper surface 201 of the module frame 200 enable the gap between the battery cell assembly 400 and the module frame 200 to be maintained as intended, and therefore, the dimensional stability of the component can be secured, and at the same time, over-injection of the thermally conductive resin can be prevented.

Note that one or more battery modules according to an exemplary embodiment of the present invention may be packaged in a pack case to form a battery pack.

The battery module described above and the battery pack including the same can be applied to various devices. These devices may include transportation means such as electric bicycles, electric vehicle, and hybrid vehicles, but the present invention is not limited thereto and can be applied to various devices that can use a battery module and a battery pack including the same, which also fall within the scope of the present invention.

Although the preferred exemplary embodiments of the present invention have been described in detail, the scope of the present invention is not limited thereto, and various modifications and improvements made by one skilled in the art by using the basic concept of the present invention defined in the following claims also fall within in the scope of the present invention.

### <Description of Symbols>

- 100:: battery module
- 110:: battery cell stack
- 200:: module frame
- 300:: bus bar frame
- 400:: battery cell assembly
- 500:: top frame
- 510:: first protrusion
- 210:: second protrusion

## Claims

1. A battery module comprising:
a battery cell stack in which a plurality of battery cells are stacked side by side and adjacent to each other;
a top frame covering an upper surface of the battery cell stack;
a bus bar frame coupled to the top frame and covering a side of the battery cell stack; and
a module frame having a quadrangular tube shape and configured to accommodate a battery cell assembly formed by combining the battery cell stack, the top frame, and the bus bar frame,
wherein the top frame comprises a first protrusion protruding toward an upper surface of the module frame at one end portion of the top frame, and
wherein the module frame comprises a second protrusion protruding toward the top frame at a position corresponding to the other end portion located on an opposite side to the one end portion of the top frame on an inner side of the upper surface of the module frame.

2. The battery module of claim 1, wherein
the first protrusion and the second protrusion have the same protruding height.

3. The battery module of claim 1, wherein
each of the first protrusion and the second protrusion has an inclined shape so that heights of the first protrusion and the second protrusion decrease in a direction toward an inside of the module frame.

4. The battery module of claim 1, further comprising
a thermally conductive resin layer arranged between a lower surface of the module frame and the battery cell assembly.

5. The battery module of claim 4, wherein
the bus bar frame comprises an extension protruding and extending along a lower surface of the battery cell stack, and
wherein the thermally conductive resin layer is positioned on an inner side of the extension.

6. The battery module of claim 4, wherein
the one end portion and the other end portion are end portions on both sides in a longitudinal direction of the top frame, and
wherein the first protrusion and the second protrusion are arranged by two or more, respectively, along a width direction perpendicular to the longitudinal direction.

7. A method of manufacturing a battery module, comprising:
forming a battery cell assembly by combining a battery cell stack in which a plurality of battery cells are stacked side by side and adjacent to each other, a top frame covering an upper surface of the battery cell stack, and a bus bar frame coupled to the top frame and covering a side of the battery cell stack; and
inserting the battery cell assembly into a module frame having a quadrangular tube shape,
wherein the top frame comprises a first protrusion protruding toward an upper surface of the module frame at one end portion of the top frame,
wherein the module frame comprises a second protrusion protruding toward an inner side of the module frame at a position corresponding to the other end portion located on an opposite side to the one end portion of the top frame on an inner side of the upper surface of the module frame, and
wherein the inserting the battery cell assembly is performed in a state in which the top frame and the upper surface of the module frame are directed downward with respect to a direction of gravity, and comprises inserting the other end portion of the top frame toward the second protrusion.

8. The method of claim 7, wherein
the first protrusion and the second protrusion have the same protruding height.

9. The method of claim 8, further comprising
injecting and curing a thermally conductive resin between the battery cell assembly and a lower surface of the module frame after inserting the battery cell assembly,
wherein in the injecting and curing the thermally conductive resin, the battery cell assembly is supported by the first protrusion and the second protrusion.

10. The method of claim 7, wherein
each of the first protrusion and the second protrusion has an inclined shape so that heights of the first protrusion and the second protrusion decrease in a direction toward an inside of the module frame, and
wherein in the inserting the battery cell assembly, the other end portion of the top frame is inserted along the inclined shape of the second protrusion.

11. A battery pack comprising at least one battery module of claim 1.
